# EUROPEAN PATENT SPECIFICATION

(11) **EP 2 825 956 B1**
(45) Date of publication and mention of the grant of the patent: **25.07.2018**
(21) Application number: 12883465.2
(22) Date of filing: 29.08.2012
(51) Int. Cl.: G06F 9/445, H04B 5/00, G06F 11/07, H04M 1/725, G06F 8/61

(54) **METHOD, APPARATUS AND SYSTEM OF RECOVERING AN OPERATING SYSTEM ON A PORTABLE COMMUNICATION DEVICE**
VERFAHREN, VORRICHTUNG UND SYSTEM ZUR WIEDERHERSTELLUNG EINES BETRIEBSSYSTEMS AUF EINER TRAGBAREN KOMMUNIKATIONSVORRICHTUNG
PROCÉDÉ, APPAREIL ET SYSTÈME DE RÉCUPÉRATION D'UN SYSTÈME D'EXPLOITATION SUR UN DISPOSITIF DE COMMUNICATION PORTABLE

(43) Date of publication of application: 21.01.2015
(73) Proprietor: Intel Corporation, Santa Clara, CA 95054 (US)
(72) Inventor: YAO, Jiewen, Jacques, Shanghai 200135 (CN); SONG, Chuan, Edmund, Shanghai 201100 (CN); ZHANG, Haili, Harry, Shanghai 200241 (CN); YANG, Wenlong, Shanghai 200240 (CN)
(74) Representative: Rummler, Felix
(86) International application number: PCT/CN2012/080680
(87) International publication number: WO 2014/032230

(56) References cited:
- WO-A1-2005/093964
- WO-A1-2007/121791
- WO-A2-01/55922
- US-A1- 2009 217 256
- US-A1- 2009 227 282

## Description

### BACKGROUND

With prevailing of portable communication devices, such as smart phones and tablets, more and more people worry about security for operating systems of the portable communication devices. In current practices, when an operating system of a portable communication device is crashed, the portable communication device may be connected with a computer via a data line or a universal serial bus (USB) to copy an operating system image from the computer. Usually, before the copying, the computer may online search and download the operating system image suitable for the portable communication device.

US 2009/217256 A1 describes a method and apparatus for upgrading firmware in a portable terminal. The method includes activating a firmware recovery engine of a first portable terminal when an error occurs during a firmware upgrading process, searching, by the first portable terminal whose firmware recovery engine is activated, for a second portable terminal comprising the same firmware version as the first portable terminal, requesting, by the first portable terminal, a firmware recovery file to recover the firmware error from the second portable terminal, transmitting the firmware recovery file from the second portable terminal receiving the request of the firmware recovery file to the first portable terminal, and recovering the firmware in the first portable terminal, by using the received firmware recovery file.

US 2009/227282 A1 describes a communication device having a first communication section that supports a first communication mode having a low communication rate and a second communication section that supports a second communication mode having a higher communication rate than the first communication mode. The communication device includes a packet generation section and a communication control section. The packet generation section generates a first portion containing authentication information used for connection authentication for the second communication mode and a second portion other than the first portion. The communication control section performs control to cause the first communication section to transmit the first portion and to cause the second communication section to transmit the second portion after the connection authentication succeeds using the authentication information contained in the first portion.

### BRIEF DESCRIPTION OF THE DRAWINGS

The invention described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements.
Fig. 1 illustrates an embodiment of a system for recovering an operating system.
Fig. 2 illustrates an embodiment of an environment for recovering the operating system, which is established by the system of Fig. 1.
Fig. 3 illustrates an embodiment of a method of recovering the operating system.

### DETAILED DESCRIPTION

While the concepts of the present disclosure are susceptible to various modifications and alternative forms, specific exemplary embodiments thereof have been shown by way of example in the drawings and will herein be described in detail. It should be understood, however, that there is no intent to limit the concepts of the present disclosure to the particular forms disclosed, but on the contrary, the intention is to cover all modifications that fall under the scope of the appended claims.

In the following description, numerous specific details such as logic implementations, opcodes, means to specify operands, resource partitioning/sharing/duplication implementations, types and interrelationships of system components, and logic partitioning/integration choices are set forth in order to provide a more thorough understanding of the present disclosure. It will be appreciated, however, by one skilled in the art that embodiments of the disclosure may be practiced without such specific details. In other instances, control structures, gate level circuits and full software instruction sequences have not been shown in detail in order not to obscure the invention. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

Embodiments of the invention may be implemented in hardware, firmware, software, or any combination thereof. Embodiments of the invention implemented in a computer system may include one or more bus-based interconnects between components and/or one or more point-to-point interconnects between components. Embodiments of the invention may also be implemented as instructions carried by or stored on a transitory or non-transitory machine-readable (e.g., computer-readable) medium, which may be read and executed by one or more processors. A machine-readable medium may be embodied as any device, mechanism, or physical structure for storing or transmitting information in a form readable by a machine (e.g., a computing device). For example, a machine-readable medium may be embodied as read only memory (ROM); random access memory (RAM); magnetic disk storage media; optical storage media; flash memory devices; mini- or micro-SD cards, memory sticks, electrical signals, and others.

In the drawings, specific arrangements or orderings of schematic elements, such as those representing devices, modules, instruction blocks, and data elements, may be shown for ease of description. However, it should be understood by those skilled in the art that the specific ordering or arrangement of the schematic elements in the drawings is not meant to imply that a particular order or sequence of processing, or separation of processes, is required. Further, the inclusion of a schematic element in a drawing is not meant to imply that such element is required in all embodiments or that the features represented by such element may not be included in or combined with other elements in some embodiments.

In general, schematic elements used to represent instruction blocks may be implemented using any suitable form of machine-readable instruction, such as software or firmware applications, programs, functions, modules, routines, processes, procedures, plug-ins, applets, widgets, code fragments and/or others, and that each such instruction may be implemented using any suitable programming language, library, application programming interface (API), and/or other software development tools. For example, some embodiments may be implemented using Java, C++, and/or other programming languages. Similarly, schematic elements used to represent data or information may be implemented using any suitable electronic arrangement or structure, such as a register, data store, table, record, array, index, hash, map, tree, list, graph, file (of any file type), folder, directory, database, and/or others.

Further, in the drawings, where connecting elements, such as solid or dashed lines or arrows, are used to illustrate a connection, relationship or association between or among two or more other schematic elements, the absence of any such connecting elements is not meant to imply that no connection, relationship or association can exist. In other words, some connections, relationships or associations between elements may not be shown in the drawings so as not to obscure the disclosure. In addition, for ease of illustration, a single connecting element may be used to represent multiple connections, relationships or associations between elements. For example, where a connecting element represents a communication of signals, data or instructions, it should be understood by those skilled in the art that such element may represent one or multiple signal paths (e.g., a bus), as may be needed, to effect the communication.

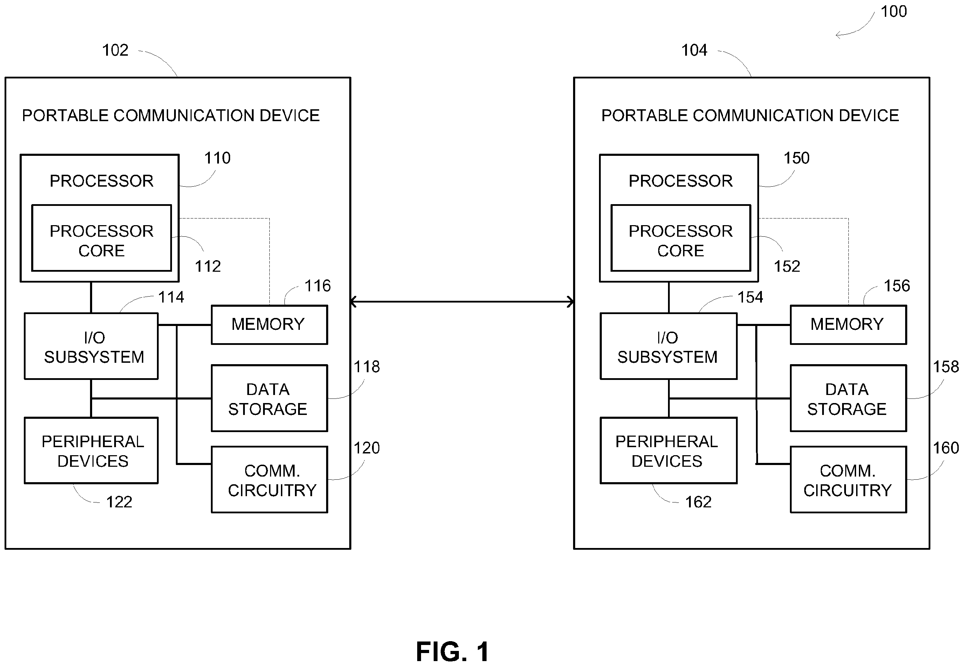

Fig. 1 illustrates an embodiment of a system 100 for recovering an operating system of a portable communication device 102 using an operating system image copied from another portable communication device 104. Here, "recovering" may refer to reinstalling, refreshing, updating, or the similar. The portable communication device 102 may include a processor 110, an I/O subsystem 114, a memory 116, a data storage 118, a communication circuitry 120, and one or more peripheral devices 122. In some embodiments, several of the foregoing components may be incorporated on a motherboard or main board of the portable communication device 102, while other components may be communicatively coupled to the motherboard via, for example, a peripheral port. Furthermore, it should be appreciated that the portable communication device 102 may include other components, sub-components, and devices commonly found in a communication and/or computing device, which are not illustrated in FIG. 1 for clarity of the description.

The processor 110 of the portable communication device 102 may be embodied as any type of processor capable of executing software/firmware, such as a microprocessor, digital signal processor, microcontroller, or the like. The processor 110 is illustratively embodied as a single core processor having a processor core 112. However, in other embodiments, the processor 110 may be embodied as a multi-core processor having multiple processor cores 112. Additionally, the portable communication device 102 may include additional processors 110 having one or more processor cores 112.

The I/O subsystem 114 of the portable communication device 102 may be embodied as circuitry and/or components to facilitate input/output operations with the processor 110 and/or other components of the portable communication device 102. In some embodiments, the I/O subsystem 114 may be embodied as a memory controller hub (MCH or "northbridge"), an input/output controller hub (ICH or "southbridge") or platform controller hub (PCH), and a firmware device. In such embodiments, the firmware device of the I/O subsystem 114 may be embodied as a memory device for storing Basic Input/Output System (BIOS) data and/or instructions and/or other information (e.g., a BIOS driver used during booting of the portable communication device 102). However, in other embodiments, I/O subsystems having other configurations may be used. For example, in some embodiments, the I/O subsystem 114 may be embodied as a platform controller hub (PCH). In such embodiments, the memory controller hub (MCH) may be incorporated in or otherwise associated with the processor 110, and the processor 110 may communicate directly with the memory 116 (as shown by the dashed line in FIG. 1). Additionally, in other embodiments, the I/O subsystem 114 may form a portion of a system-on-a-chip (SoC) and be incorporated, along with the processor 110 and other components of the portable communication device 102, on a single integrated circuit chip.

The processor 110 is communicatively coupled to the I/O subsystem 114 via a number of signal paths. These signal paths (and other signal paths illustrated in FIG. 1) may be embodied as any type of signal paths capable of facilitating communication between the components of the portable communication device 102. For example, the signal paths may be embodied as any number of point-to-point links, wires, cables, light guides, printed circuit board traces, vias, bus, intervening devices, and/or the like.

The memory 116 of the portable communication device 102 may be embodied as or otherwise include one or more memory devices or data storage locations including, for example, dynamic random access memory devices (DRAM), synchronous dynamic random access memory devices (SDRAM), double-data rate synchronous dynamic random access memory device (DDR SDRAM), mask read-only memory (ROM) devices, erasable programmable ROM (EPROM), electrically erasable programmable ROM (EEPROM) devices, flash memory devices, and/or other volatile and/or non-volatile memory devices. The memory 116 is communicatively coupled to the I/O subsystem 114 via a number of signal paths. Although only a single memory device 116 is illustrated in FIG. 1, the portable communication device 102 may include additional memory devices in other embodiments. Various data and software may be stored in the memory 116. For example, one or more operating systems, applications, programs, libraries, and drivers that make up the software stack executed by the processor 110 may reside in memory 116 during execution.

The data storage 118 may be embodied as any type of device or devices configured for the short-term or long-term storage of data. For example, the data storage 118 may include any one or more memory devices and circuits, memory cards, hard disk drives, solid-state drives, or other data storage devices

The communication circuitry 120 of the portable communication device 102 may include any number of devices and circuitry for enabling communications between the portable communication device 102 and one or more devices or networks as discussed in more detail below. The communication circuitry 120 may be configured to use any one or more, or combination thereof, communication protocols to communicate, such as, for example, a cellular communication protocol (e.g., Wideband Code Division Multiple Access (W-CDMA)), a wireless network communication protocol (e.g., Wi-Fi®, WiMAX), a wireless personal area network communication protocol (e.g., Bluetooth®), a wired network communication protocol (e.g., TCP/IP), and/or other communication protocols.

In some embodiments, the portable communication device 102 may also include one or more peripheral devices 122. Such peripheral devices 122 may include any number of additional input/output devices, interface devices, and/or other peripheral devices. For example, in some embodiments, the peripheral devices 122 may include a display, touch screen, graphics circuitry, keyboard, speaker system, and/or other input/output devices, interface devices, and/or peripheral devices.

The portable communication device 104 may be substantially similar to the portable communication device 102 and include similar components, which have been identified in FIG. 1 with a common reference numbering scheme, including a processor 150, a processor core 152, a I/O subsystem 154, a memory 156, a data storage 158, a communication circuitry 160 and one or more peripheral devices 162. As such, the description provided above of the components of the portable communication device 102 is equally applicable to those similar components of the portable communication device 104 and is not repeated herein so as not to obscure the present disclosure. Of course, it should be appreciated that in some embodiments the portable communication devices 102, 104 of the system 100 may be dissimilar to each other. For example, the portable communication devices of the system 100 may be embodied as various types of communication devices different from each other (e.g., a tablet, a smart phone, or other communication device) and include components typically found in such corresponding communication devices.

Each of the portable communication devices 102, 104 of the system 100 may be embodied as any type of communication device capable of performing the functions described herein. For example, each of the portable communication devices 102, 104 may be embodied as, without limitation, a smart phone, a cellular telephone, a handset, a messaging device, a tablet, a consumer electronic device, and/or any other portable communication device configured to recovering the operating system.

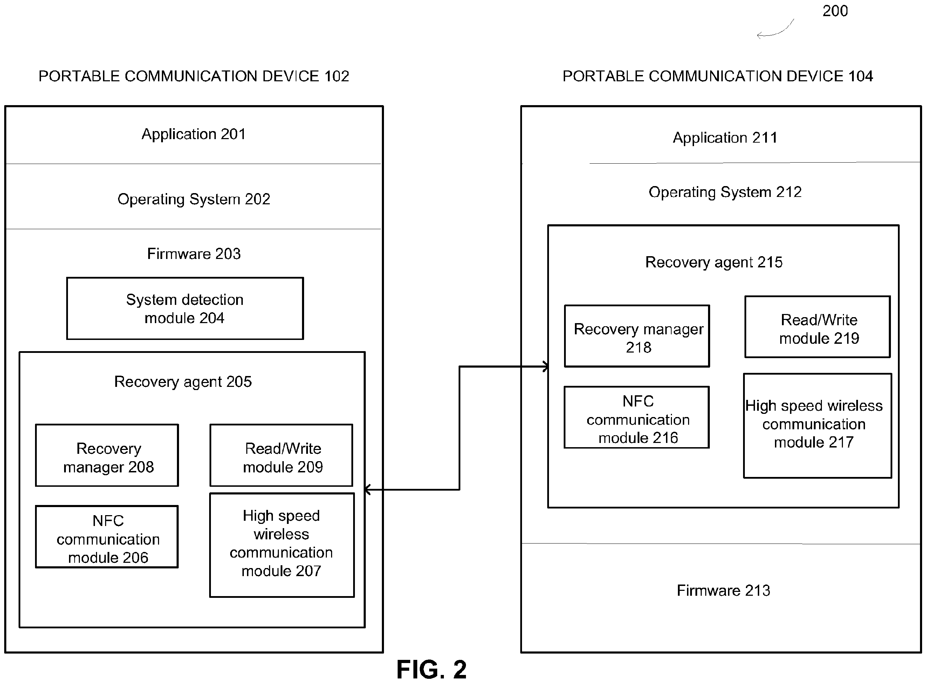

Fig. 2 illustrates an embodiment of an environment 200 for recovering the operating system, which is established by the system of Fig. 1. In an embodiment, the environment 200 may comprise a recovery agent 205 residing in a firmware 203 of the portable communication device 102, which may communicate with a recovery agent 215 residing in an operating system 212 of the portable communication device 104, to recover an operating system 202 in the portable communication device 102, in response that a system detection module 204 residing in the firmware 203 detects that the operating system 202 is crashed.

In an embodiment, the system detection module 204 may detect a system of the portable communication device 102 during a system boot process, including detecting whether the operating system 202 is crashed, e.g., because of a malicious attack to the portable communication device 102. If the operating system 202 is crashed, the system detection module 204 may send a recovery request to the recovery agent 205. However, it should be understood that other embodiments may implement other technologies for the recovery request. For example, the system detection module 204 may report to a user of the portable communication device 102, who may request the recovery, e.g., through pressing a key.

In an embodiment, the recovery agent 205 may comprise a near field communication (NFC) module 206, a high speed wireless communication module 207, a recovery manager 208 and a read/write module 209. The recovery agent 215 may comprise a near field communication (NFC) module 216, a high speed wireless communication module 217, a recovery manager 218 and a read/write module 219.

In an embodiment, the NFC module 206 may detect whether the portable communication device 104 exists, connect the portable communication device 102 with the portable communication device 104 and obtain a network address of the portable communication device 104, based on NFC technologies. In response to detecting the existence of the portable communication device 104, the recovery manager 208 may initiate a session with the recovery manager 218. For example, the recovery manager 208 may coordinate the NFC module 206 to send a request of connection and receive a response to the request from/to the recovery manager 218 of the portable communication device 104.

In an embodiment, after the session is initiated, the NFC module 206 may disconnect the NFC connection with the portable communication device 104. The high speed wireless communication module 207 may then connect the portable communication device 102 with the portable communication device 104, based on a high speed wireless communication technology, such as Bluetooth or WiFi. The high speed wireless communication module 207 may complete the connection using the network address obtained from the NFC module.

Through the high speed wireless connection, the recovery manager 208 may continue the session with the recovery manager 218 to copy an operating system image from the portable communication device 104 using the read/write module 209. Examples of the operating system image may include the operating system 212 of the portable communication device 104, except for any data or codes desired to keep secret from the portable communication device 102, such as private data. In another embodiment, the operating system image may be obtained from a third party, e.g., an online source, and pre-stored in the portable communication device 104. In yet another embodiment, the operating system image may be copied from the portable communication device 102 before the operating system 202 is crashed.

In an embodiment, the NFC module 216 may detect whether the portable communication device 102 exists, connect the portable communication device 104 with the portable communication device 102, and obtain a network address of the portable communication device 102, based on the NFC technology. In response to detecting the existence of the portable communication device 102, the recovery manager 218 may initiate a session with the recovery manager 208 of the portable communication device 102. For example, the recovery manager 218 may coordinate the NFC module 216 to receive a request of connection and send a response to the request from/to the recovery manager 208 of the portable communication device 104.

In an embodiment, after the session is initiated, the NFC module 216 may disconnect the NFC link with the portable communication device 102. The high speed wireless communication module 217 may then connect the portable communication device 104 with the portable communication device 102, based on a high speed wireless communication technology, such as Bluetooth or WiFi. The high speed wireless communication module 217 may complete the connection using the network address obtained by the NFC module.

Through the high speed wireless connection, the recovery manager 218 may continue the session with the recovery manager 208 to obtain the operating system image using the read/write module 219 and send the operating system image to the portable communication device 102.

As illustrated in Fig. 2, the portable communication device 102 may further install various applications running over the operating system 202. Similarly, the portable communication device 104 may further install a firmware 213 running under the operating system 212 and various applications 211 running over the operating system 212.

In some embodiments, the various modules of the environment 200 may be embodied as hardware, software, firmware or a combination thereof. For example, any of the above-stated modules may be embodied as software/firmware instructions stored in a machine-readable medium of the portable communication device 102 or the portable communication device 104.

With the above solution, the portable communication device 102 may recover the operating system from another portable communication device without the need of a wired connection, such as a data line or a USB. On the contrary, a wireless connection can be used to recover the operating system from a reliable source, namely, the portable communication device 104, which the user of the portable communication device 102 trusts and runs the operating system that may be suitable for the portable communication device 102 as well. In addition, since the portable communication devices 102 and 104 obtain each other's network address and initiate the session via the NFC connection, it avoids broadcasting under other wireless communication schemes to obtain the targeted network addresses, and thus enhances security for the later operating system image transmission.

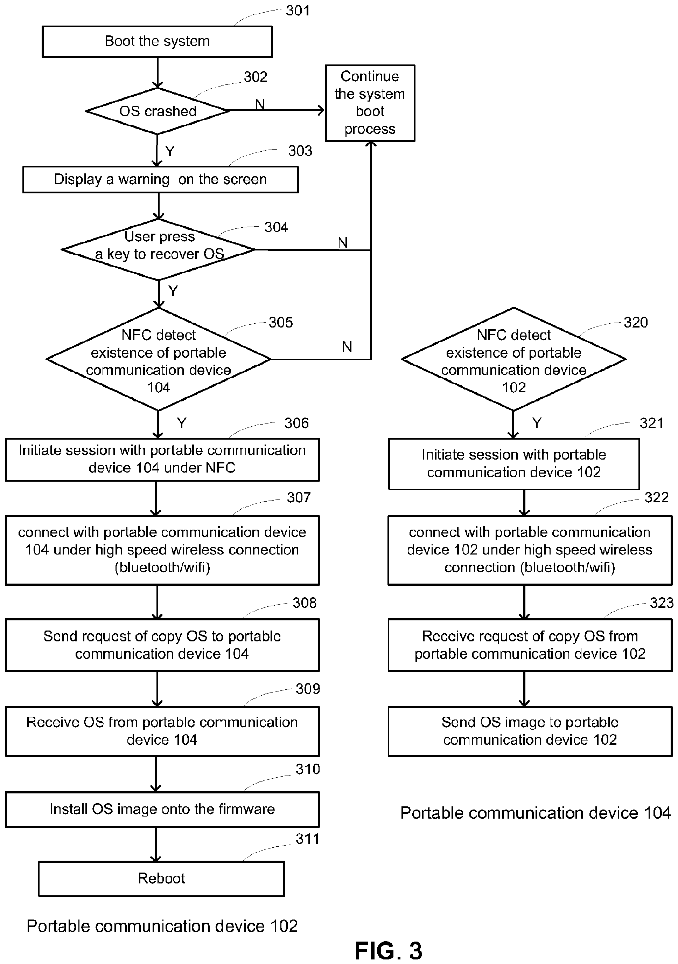

Fig. 3 illustrates an embodiment of a method of recovering the operating system. The method on the left is implemented by the portable communication device 102, while the method on the right is implemented by the portable communication device 104.

Referring to the method on the left, in block 301, when booting the system of the portable communication device 102, the system detection module 204 may check hardware and software of the system. If, in block 302, the system detection module 204 detects that the operating system 202 is crashed before being loaded into a memory of the portable communication device 102, then in blocks 303-304, the portable communication device 102 may display the information about the operating system being crashed on its screen and detect whether the user presses a key to request the operating system recovery. If the user presses the key, then in block 305, the NFC module 206 or other device may detect whether the portable communication device 104 having a good operating system image suitable for the portable communication device 102 exists within a NFC communication distance. In response to detecting the existence of the portable communication device 104, the recovery manager 208 or other device may initiate a session with the recovery manager 218 or other device, in block 306. For example, the recovery manager 208 may coordinate the NFC module 206 to connect with the portable communication device 104 and obtain the network address of the portable communication device 104, based on the NFC technologies. In an embodiment, after the session is initiated, the NFC module 206 may disconnect the NFC connection with the portable communication device 104.

Then, in block 307, the recovery manager 208 or other device may coordinate the high speed wireless communication module 207 or other device to connect the portable communication device 102 with the portable communication device 104, based on a high speed wireless communication technology, such as Bluetooth or WiFi. The high speed wireless communication module 207 may complete the connection using the network address obtained from the NFC module. In block 308, the recovery manager 208 or other device may continue the session with the recovery manager 218 and send a request of copying the operating system image to the portable communication device 104. Examples of the operating system image may include the operating system 212 of the portable communication device 104, except for any data or codes desired to keep secret from the portable communication device 102, e.g., private data. In an embodiment, the operating system image may be obtained from a third party, e.g., an online source, and pre-stored in the portable communication device 104. In yet another embodiment, the operating system image may be copied from the portable communication device 102 before the operating system 202 is crashed.

In blocks 309-310, the recovery manager 208 or other device may receive the operating system image from the portable communication device 104, and install the operating system image onto the firmware 203 using the read/write module 209 or other device. In block 311, the portable communication device 102 may reboot and load the operating system image to the memory.

Referring now to the method on the right, in block 320, the NFC module 216 or other device may detect whether the portable communication device 102 exists within a NFC communication distance. In response to detecting the existence of the portable communication device 102, the recovery manager 218 or other device may initiate a session with the recovery manager 208 or other device, in block 321. For example, the recovery manager 208 may coordinate the NFC module 206 to connect with the portable communication device 102 and obtain the network address of the portable communication device 102, based on the NFC technologies. In an embodiment, after the session is initiated, the NFC module 216 may disconnect the NFC connection with the portable communication device 102.

Then, in block 322, the high speed wireless communication module 217 or other device may connect the portable communication device 104 with the portable communication device 102, based on a high speed wireless communication technology, such as Bluetooth or WiFi. The high speed wireless communication module 217 may complete the connection using the network address obtained from the NFC module 216. In block 323, the recovery manager 18 or other device may continue the session with the recovery manager 208 and receive a request of copying the operating system image from the portable communication device 102. Examples of the operating system image may include the operating system 212, except for any data or codes desired to keep secret from the portable communication device 102, e.g., the private data. In another embodiment, the operating system image may be obtained from a third party, e.g., an online source, and pre-stored in the portable communication device 104. In yet another embodiment, the operating system image may be copied from the portable communication device 102 before the operating system 202 is crashed. In block 324, the recovery manager 218 or other device may obtain the operating system image using the read/write module 219, and send the operating system image to the portable communication device 102.

It should be understood that other embodiments may implement other technologies for the system and method as discussed above. In an embodiment, the process of displaying the operating system being crashed on the screen and waiting for the user to press the key may be omitted. On the contrary, when the system detection module 204 detects that the operating system 202 is crashed, the system detection module 204 or other device may send the recovery agent 205 with the request of recovering the operating system, in response to which, the recovery agent 205 can start connecting with the portable communication device 104 and recover the operating system. In another embodiment, the portable communication device 102 may recover the operating system, even if the operating system 202 hasn't been crashed. For example, during the system boot process, the user may initiatively request the operating system recovery (e.g., through pressing a special key), rather than requesting the recovery after receiving the notification of the operating system being crashed.

While the disclosure has been illustrated and described in detail in the drawings and foregoing description, such an illustration and description is to be considered as exemplary and not restrictive in character, it being understood that only illustrative embodiments have been shown and described and that all changes and modifications consistent with the disclosure and recited claims are desired to be protected.

### EXAMPLES

Illustrative examples of the devices, systems, and methods disclosed herein are provided below. An embodiment of the devices, systems, and methods may include any one or more, and any combination of, the examples described below.

In one example, a portable communication device may comprise a near field communication module; a high speed wireless communication module; and a recovery manager to initiate a session between the portable communication device and another portable communication device through a near field communication connection established by the near field communication module, continue the session to receive an operating system image from the another portable communication device through a high speed wireless connection established by the high speed wireless communication module and recover an operating system of the portable communication device with use of the operating system image.

Additionally, in an example, the near field communication module, the high speed communication module and the recovery manager may be stored in a firmware of the portable communication device. Additionally, in any of the above examples, the near field communication module may be further to obtain an address of the another portable communication device during the session through the near field communication connection; and the high speed wireless communication module may be further to utilize the address to establish the high speed wireless connection with the another portable communication device.

Additionally, in any of the above examples, the recovery manager may be further to initiate the session in response that a user of the portable communication device presses a key to request recovering the operating system. Additionally, in any of the above examples, the recovery manager may be further to recover the operating system through storing the operating system image in the firmware and rebooting the portable communication device. Additionally, in any of the above examples, the high speed wireless connection may be Bluetooth or Wi-Fi connection. Additionally, in any of the above examples, the portable communication device and the another portable communication device may be smart phones.

In another example, a method operated by a portable communication device may comprise initiating, by a recovery manager, a session between the portable communication device and another portable communication device through a near field communication connection established by a near field communication module; and continuing, by the recovery manager, the session to receive an operating system image from the another portable communication device through a high speed wireless connection established by a high speed wireless communication module; and recovering, by the recovery manager, an operating system of the portable communication device with use of the operating system image, wherein the near field communication module, the high speed communication module and the recovery manager may be stored in a firmware of the portable communication device.

Additionally, in an example, the method may further comprise obtaining, by the near field communication module, an address of the another portable communication device during the session through the near field communication connection; and utilizing, by the high speed wireless communication module, the address to establishing the high speed wireless connection with the another portable communication device.

Additionally, in any of the above examples, the operating system image is received from another recovery manager stored in another operating system of the another portable communication device. Additionally, in any of the above examples, the initiating the session comprises initiating the session further in response that an user of the portable communication device presses a key to request recovering the operating system.

Additionally, in any of the above examples, the recovering the operating system further comprises storing the operating system image in the firmware; and rebooting the portable communication device. Additionally, in any of the above examples, the high speed wireless connection is Bluetooth or Wi-Fi communication. Additionally, in any of the above examples, the portable communication device and the another portable communication device are smart phones.

In another example, a portable communication device may comprise a near field communication module; a high speed wireless communication module; and a recovery manager to initiate a session between the portable communication device with another portable communication device through a near field communication connection established by the near field communication module; and continue the session to send an operating system image to the another portable communication device through a high speed wireless connection established by the high speed wireless communication module, in response to a request from another recovery manager stored in a firmware of the another portable communication device

Additionally, in an example, the near field communication module, the high speed communication module and recovery manager may be stored in an operating system of the portable communication device. Additionally, in any of the above examples, the near field communication module may be further to obtain an address of the another portable communication device during the session through the near field communication connection, and the high speed wireless communication module may be further to utilize the address to establish the high speed wireless connection with the another portable communication device.

Additionally, in any of the above examples, the high speed wireless connection is Bluetooth or Wi-Fi communication. Additionally, in any of the above examples, the portable communication device and the another portable communication device are smart phones.

In another example, a method operated by a portable communication device may comprise initiating, by a recovery manager, a session between the portable communication device with another portable communication device through a near field communication connection established by a near field communication module; and continuing, by the recovery manager, the session to send an operating system image to the another portable communication device through a high speed wireless connection established by a high speed wireless communication module, in response to a request from another recovery manager stored in a firmware of the another portable communication device, wherein the near field communication module, the high speed communication module and the recovery manager may be stored in an operating system of the portable communication device.

Additionally, in any of the above examples, the method may further comprise obtaining, by the near field communication module, an address of the another portable communication device during the session through the near field communication connection; and utilizing, by the high speed wireless communication module, the address to establish the high speed wireless connection with the another portable communication device. Additionally, in any of the above examples, the high speed wireless connection is Bluetooth or Wi-Fi communication. Additionally, in any of the above examples, the portable communication device and the another portable communication device are smart phones.

## Claims

1. A portable communication device (102), comprising:
a near field communication module (206);
a high speed wireless communication module (207); and
a recovery manager (208) to
initiate, in response to a determination that an operating system (202) of the portable communication device has crashed, a session between the portable communication device (102) and another portable communication device (104) through a near field communication connection established by the near field communication module (206);
continue the session to receive an operating system image from the another portable communication device (104) through a high speed wireless connection established by the high speed wireless communication module (207); and
recover the operating system (20) of the portable communication device with use of the operating system image through storing the operating system image in the firmware (203) and rebooting the portable communication device (102).

2. The portable communication device (102) of claim 1, wherein the near field communication module (206), the high speed communication module (207) and the recovery manager (208) are stored in the firmware (203) of the portable communication device (102).

3. The portable communication device (102) of claim 1, wherein the near field communication module (206) is further to obtain an address of the another portable communication device (104) during the session through the near field communication connection; and the high speed wireless communication module (207) is further to utilize the address to establish the high speed wireless connection with the another portable communication device.

4. The portable communication device (102) of claim 1, wherein the recovery manager (208) is further to initiate the session in response that a user of the portable communication device presses a key to request recovering the operating system (202).

5. The portable communication device (102) of claim 1, wherein the high speed wireless connection is Bluetooth or Wi-Fi connection.

6. The portable communication device (102) of claim 1, wherein the portable communication device and the another portable communication device (104) are smart phones.

7. A method operated by a portable communication device, comprising:
initiating (306), by a recovery manager and in response to a determination that an operating system of the portable communication device has crashed, a session between the portable communication device and another portable communication device through a near field communication connection established by a near field communication module;
continuing, by the recovery manager, the session to receive (309) an operating system image from the another portable communication device through a high speed wireless connection established by a high speed wireless communication module; and
recovering, by the recovery manager, the operating system of the portable communication device with use of the operating system image;
wherein the near field communication module, the high speed communication module and the recovery manager are stored in a firmware of the portable communication device; and
wherein recovering the operating system further comprises:
storing (310) the operating system image in the firmware; and
rebooting (311) the portable communication device.

8. The method of claim 7, further comprising:
obtaining, by the near field communication module, an address of the another portable communication device during the session through the near field communication connection; and
utilizing, by the high speed wireless communication module, the address to establishing the high speed wireless connection with the another portable communication device.

9. The method of claim 7, wherein the operating system image is received from another recovery manager stored in another operating system of the another portable communication device.

10. The method of claim 7, wherein initiating the session comprises initiating the session further in response that a user of the portable communication device presses a key to request recovering the operating system.

11. The method of claim 7, wherein the high speed wireless connection is Bluetooth or Wi-Fi communication.

12. The method of claim 7, wherein the portable communication device and the another portable communication device are smart phones.

13. One or more machine readable storage media comprising a plurality of instructions stored thereon that in response to being executed result in a computing device performing the method of any of claims 7-12.

## Patentansprüche

1. Tragbare Kommunikationsvorrichtung (102), umfassend:
ein Nahfeldkommunikationsmodul (206);
ein drahtloses Hochgeschwindigkeitskommunikationsmodul (207); und
einen Wiederherstellungsmanager (208), um
als Reaktion auf eine Ermittlung, dass ein Betriebssystem (202) der tragbaren Kommunikationsvorrichtung abgestürzt ist, über eine durch das Nahfeldkommunikationsmodul (206) eingerichtete Nahfeldkommunikationsverbindung eine Sitzung zwischen der tragbaren Kommunikationsvorrichtung (102) und einer anderen tragbaren Kommunikationsvorrichtung (104) zu initiieren;
die Sitzung weiterzuführen, um über eine vom drahtlosen Hochgeschwindigkeitskommunikationsmodul (207) eingerichtete drahtlose Hochgeschwindigkeitsverbindung ein Betriebssystemabbild von der anderen tragbaren Kommunikationsvorrichtung (104) zu empfangen; und das Betriebssystem (20) der tragbaren Kommunikationsvorrichtung unter Verwendung des Betriebssystemabbilds durch Speichern des Betriebssystemabbilds in der Firmware (203) und erneutes Hochfahren der tragbaren Kommunikationsvorrichtung (102) wiederherzustellen.

2. Tragbare Kommunikationsvorrichtung (102) nach Anspruch 1, wobei das Nahfeldkommunikationsmodul (206), das Hochgeschwindigkeitskommunikationsmodul (207) und der Wiederherstellungsmanager (208) in der Firmware (203) der tragbaren Kommunikationsvorrichtung (102) gespeichert sind.

3. Tragbare Kommunikationsvorrichtung (102) nach Anspruch 1, wobei das Nahfeldkommunikationsmodul (206) ferner während der Sitzung eine Adresse der anderen tragbaren Kommunikationsvorrichtung (104) über die Nahfeldkommunikationsverbindung zu beziehen hat; und das drahtlose Hochgeschwindigkeitskommunikationsmodul (207) ferner die Adresse einzusetzen hat, um die drahtlose Hochgeschwindigkeitsverbindung mit der anderen tragbaren Kommunikationsvorrichtung einzurichten.

4. Tragbare Kommunikationsvorrichtung (102) nach Anspruch 1, wobei der Wiederherstellungsmanager (208) ferner die Sitzung als Reaktion darauf zu initiieren hat, dass ein Benutzer der tragbaren Kommunikationsvorrichtung eine Taste drückt, um ein Wiederherstellen des Betriebssystems (202) anzufordern.

5. Tragbare Kommunikationsvorrichtung (102) nach Anspruch 1, wobei die drahtlose Hochgeschwindigkeitsverbindung eine Bluetooth- oder WiFi-Verbindung ist.

6. Tragbare Kommunikationsvorrichtung (102) nach Anspruch 1, wobei die tragbare Kommunikationsvorrichtung und die andere tragbare Kommunikationsvorrichtung (104) Smartphones sind.

7. Verfahren, das von einer tragbaren Kommunikationsvorrichtung betrieben wird, umfassend:
Initiieren (306), durch einen Wiederherstellungsmanager und als Reaktion auf eine Ermittlung, dass ein Betriebssystem der tragbaren Kommunikationsvorrichtung abgestürzt ist, einer Sitzung zwischen der tragbaren Kommunikationsvorrichtung und einer anderen tragbaren Kommunikationsvorrichtung über eine durch ein Nahfeldkommunikationsmodul eingerichtete Nahfeldkommunikationsverbindung;
Weiterführen der Sitzung durch den Wiederherstellungsmanager, um über eine von einem drahtlosen Hochgeschwindigkeitskommunikationsmodul eingerichtete drahtlose Hochgeschwindigkeitsverbindung ein Betriebssystemabbild von der anderen tragbaren Kommunikationsvorrichtung zu empfangen (309); und
Wiederherstellen des Betriebssystems der tragbaren Kommunikationsvorrichtung durch den Wiederherstellungsmanager unter Verwendung des Betriebssystemabbilds;
wobei das Nahfeldkommunikationsmodul, das Hochgeschwindigkeitskommunikationsmodul und der Wiederherstellungsmanager in einer Firmware der tragbaren Kommunikationsvorrichtung gespeichert sind; und
wobei das Wiederherstellen des Betriebssystems ferner umfasst:
Speichern (310) des Betriebssystemabbilds in der Firmware; und
erneutes Hochfahren (311) der tragbaren Kommunikationsvorrichtung.

8. Verfahren nach Anspruch 7, ferner umfassend:
Beziehen, durch das Nahfeldkommunikationsmodul, einer Adresse der anderen tragbaren Kommunikationsvorrichtung über die Nahfeldkommunikationsverbindung während der Sitzung; und
Einsetzen, durch das drahtlose Hochgeschwindigkeitskommunikationsmodul, der Adresse, um die drahtlose Hochgeschwindigkeitsverbindung mit der anderen tragbaren Kommunikationsvorrichtung einzurichten.

9. Verfahren nach Anspruch 7, wobei das Betriebssystemabbild von einem anderen Wiederherstellungsmanager empfangen wird, der in einem anderen Betriebssystem der anderen tragbaren Kommunikationsvorrichtung gespeichert ist.

10. Verfahren nach Anspruch 7, wobei das Initiieren der Sitzung ein Initiieren der Sitzung als Reaktion darauf umfasst, dass ein Benutzer der tragbaren Kommunikationsvorrichtung eine Taste drückt, um ein Wiederherstellen des Betriebssystems anzufordern.

11. Verfahren nach Anspruch 7, wobei die drahtlose Hochgeschwindigkeitsverbindung eine Bluetooth- oder WiFi-Kommunikation ist.

12. Verfahren nach Anspruch 7, wobei die tragbare Kommunikationsvorrichtung und die andere tragbare Kommunikationsvorrichtung Smartphones sind.

13. Maschinenlesbares Medium oder mehrere maschinenlesbare Medien, eine Vielzahl von darauf gespeicherten Anweisungen umfassend, die als Reaktion auf ihre Ausführung darin resultieren, dass eine Rechenvorrichtung das Verfahren nach einem der Ansprüche 7-12 durchführt.

## Revendications

1. Dispositif de communication portable (102), comprenant :
un module de communication en champ proche (206) ;
un module de communication sans fil haut débit (207) ; et
un gestionnaire de récupération (208) destiné à
initier, en réponse à une détermination qu'un système d'exploitation (202) du dispositif de communication portable a planté, une session entre le dispositif de communication portable (102) et un autre dispositif de communication portable (104) par l'intermédiaire d'une connexion de communication en champ proche établie par le module de communication en champ proche (206) ;
continuer la session pour recevoir une image de système d'exploitation à partir du un autre dispositif de communication portable (104) par l'intermédiaire d'une connexion sans fil haut débit établie par le module de communication sans fil haut débit (207) ; et
récupérer le système d'exploitation (20) du dispositif de communication portable au moyen de l'image de système d'exploitation en stockant l'image de système d'exploitation dans le firmware (203) et en relançant le dispositif de communication portable (102) .

2. Dispositif de communication portable (102) selon la revendication 1, dans lequel le module de communication en champ proche (206), le module de communication haut débit (207) et le gestionnaire de récupération (208) sont stockés dans le firmware (203) du dispositif de communication portable (102).

3. Dispositif de communication portable (102) selon la revendication 1, dans lequel le module de communication en champ proche (206) doit en outre obtenir une adresse du un autre dispositif de communication portable (104) durant la session par l'intermédiaire de la connexion de communication en champ proche ; et le module de communication sans fil haut débit (207) doit en outre utiliser l'adresse pour établir la connexion sans fil haut débit avec le un autre dispositif de communication portable.

4. Dispositif de communication portable (102) selon la revendication 1, dans lequel le gestionnaire de récupération (208) doit en outre initier la session en réponse à un utilisateur du dispositif de communication portable pressant une touche pour demander la récupération du système d'exploitation (202).

5. Dispositif de communication portable (102) selon la revendication 1, dans lequel la connexion sans fil haut débit est une connexion Bluetooth ou Wi-Fi.

6. Dispositif de communication portable (102) selon la revendication 1, dans lequel le dispositif de communication portable et le un autre dispositif de communication portable (104) sont des téléphones intelligents.

7. Procédé opéré par un dispositif de communication portable, comprenant :
initier (306), par un gestionnaire de récupération et en réponse à une détermination qu'un système d'exploitation du dispositif de communication portable a planté, une session entre le dispositif de communication portable et un autre dispositif de communication portable par l'intermédiaire d'une connexion de communication en champ proche établie par un module de communication en champ proche ;
continuer, par le gestionnaire de récupération, la session pour recevoir (309) une image de système d'exploitation à partir du un autre dispositif de communication portable par l'intermédiaire d'une connexion sans fil haut débit établie par un module de communication sans fil haut débit ; et
récupérer, par le gestionnaire de récupération, le système d'exploitation du dispositif de communication portable au moyen de l'image de système d'exploitation ;
le module de communication en champ proche, le module de communication haut débit et le gestionnaire de récupération étant stockés dans un firmware du dispositif de communication portable ; et
l'étape consistant à récupérer le système d'exploitation comprenant en outre :
stocker (310) l'image de système d'exploitation dans le firmware ; et
relancer (311) le dispositif de communication portable.

8. Procédé selon la revendication 7, comprenant en outre :
obtenir, par le module de communication en champ proche, une adresse du un autre dispositif de communication portable durant la session par l'intermédiaire de la connexion de communication en champ proche ; et
utiliser, par le module de communication sans fil haut débit, l'adresse pour établir la connexion sans fil haut débit avec le un autre dispositif de communication portable.

9. Procédé selon la revendication 7, dans lequel l'image de système d'exploitation est reçue à partir d'un autre gestionnaire de récupération stocké dans un autre système d'exploitation du un autre dispositif de communication portable.

10. Procédé selon la revendication 7, dans lequel l'étape consistant à initier la session comprend initier en outre la session en réponse à un utilisateur du dispositif de communication portable appuyant sur une touche pour demander la récupération du système d'exploitation.

11. Procédé selon la revendication 7, dans lequel la connexion sans fil haut débit est une communication Bluetooth ou Wi-Fi.

12. Procédé selon la revendication 7, dans lequel le dispositif de communication portable et le un autre dispositif de communication portable sont des téléphones intelligents.

13. Un ou plusieurs supports de stockage lisibles par machine stockant une pluralité d'instructions qui, en réponse à leur exécution, ont pour résultat la mise en oeuvre, par un dispositif informatique, du procédé selon l'une quelconque des revendications 7-12.
